# EUROPEAN PATENT APPLICATION

(11) **EP 0 907 077 A2**
(43) Date of publication of application: **07.04.1999**
(21) Application number: 98118007.8
(22) Date of filing: 23.09.1998
(51) Int. Cl.: G01N 27/90

(54) **Turbine blade inspection apparatus**

(30) Priority: 25.09.1997 US 937951
(71) Applicant: Siemens Power Corporation, Richland, WA 99352-0130 (US)
(72) Inventor: Juell, Gerald, Big Ben, WI 53013 (US); Steen, Brad, Waukesha, WI 53188 (US); Schoepflin, Daniel E., Kennewick, WA 99337 (US)
(74) Representative: Kahlhöfer, Hermann, Dipl.-Phys.

(57) **Abstract**

A method and apparatus for inspecting the turbine blades of a turbine by inserting the inspection apparatus through a borescope hole in the turbine casing.

## Description

### FIELD OF THE INVENTION

The present invention relates generally to turbine inspection, and more particularly to a method and an apparatus to quickly inspect and detect, in situ, damaged turbine rotor blades within the turbine without requiring costly and time consuming disassembly of the turbine to obtain access to the turbine rotor blades.

### BACKGROUND OF THE INVENTION

High reliability and capacity factors of power generating systems and turbine-generator units is a primary responsibility and goal of the electric utility industry. The occurrence and cost of outages, the removal from service of the turbine, and the concomitant unavailability of the turbine result in lost revenue to the utility company. Turbine blade distress is a leading cause of turbine forced outages. The failure of a turbine blade generally leads to extensive damage and potentially catastrophic failure. Turbine blades experience substantial thermal and mechanical stresses which can cause cyclic fatigue, stress corrosion, microstructural embiddlement, and cracking. It is therefore important to be able to detect any metallurgical defect or physical structural abnormality which may develop due to the stresses of operation.

During an outage, the inspection of the turbine and particularly turbine blades typically requires extensive turbine disassembly in order to perform the inspection. Frequently, turbine blades are necessarily removed from the turbine rotor for the inspection which adds to the time and expense of the inspection. The components of a turbine most susceptible to in-service cracking are the turbine blades. If the cracks are visible, visual optical methods of inspection can be utilized. However, visual optical methods of inspection are frequently inadequate to detect, and are unreliable to identify metallurgical defects, physical abnormalities, and in-service cracking in turbine blades. If the turbine interior is exposed by the removal of the outer and inner turbine casings, it is known to alternatively inspect the turbine by placing an eddy current coil sensor and/or a fiber optic or small camera inside the turbine. While the turbine interior is exposed to provide access to the turbine blades, an operator manually probes the turbine test area by visually inspecting the turbine test or inspection area by using a fiber optic or a small camera to help place the eddy current coil sensor on the area to be inspected. The use of eddy currents, in a known manner, offers the ability to detect and locate defects or abnormalities with the aid of a probe which is moved over the surface of a turbine blade when the turbine interior is exposed.

The position of the eddy current coils within the probe and the position of the eddy current probe in relation to the surface explored are important factors in the precision of the results. Typical problems include inaccurate positioning of the eddy current coil or probe on the area to be inspected, and failure to adequately inspect all critical areas where cracks may be present. The difficulty of manual, in situ exploration and inspection of turbine blades due to the inaccessability of and smallness of the space within the turbine and between and among the turbine blades is exacerbated, if not rendered impossible, if the inspection is to be performed without turbine disassembly. However, removal of the turbine from service and disassembly of the turbine engine to gain access to the turbine blades to inspect for in-service cracking involves a substantial amount of labor requiring approximately two weeks, costing hundreds of thousands of dollars. If however, the turbine is not disassembled and an inspection utilizing eddy current inspection techniques is not performed, then an accurate assessment of the condition of the turbine blades, and particularly whether they sustained any in-service cracks would remain unknown, resulting in the possibility after returning the turbine to service of turbine blade failure and possible catastrophic failure of the turbine.

Accordingly, there exists a need for a turbine blade inspection system which can achieve rapid and efficient inspection of the turbine blades, in situ, remotely, and without the need for, and expense of, turbine disassembly and reassembly.

### SUMMARY OF THE INVENTION

The present invention relates to a turbine blade inspection apparatus for inspecting in situ turbine engine blades in a stage of the turbine engine by eddy currents from a remote location, the engine including a casing about said stage and a borescope hole extending through the casing and into the stage in which a turbine blade is to be inspected, the apparatus having insertion means for insertion into the borescope hole extending through the casing and into the stage in which the turbine blade is to be inspected; sensor probe means for holding eddy current coils; and sensor positioning means on said insertion means and adapted to be moveable by said insertion means for remotely positioning and engaging said sensor probe means to a portion of the turbine blade to be inspected to thereby facilitate eddy current inspection of the turbine blade.

In another embodiment, a method for inspecting in situ turbine engine blades in a stage of the turbine engine by eddy currents from a remote location is provided, the engine including a casing about said stage and a borescope hole extending through the casing and into the stage in which a turbine blade is to be inspected, the method comprising the steps of: providing a turbine blade inspection apparatus which includes insertion means for insertion into the borescope hole and into the stage in which the turbine blade is to be inspected, sensor probe means for holding eddy current coils, sensor positioning means on said insertion means and adapted to be moveable by said insertion means for remotely positioning and engaging said sensor probe means to a portion of the turbine blade to be inspected to thereby facilitate eddy current inspection of the turbine blade; inserting the insertion means of said turbine inspection apparatus into the borescope hole and into the stage in which the turbine blade is to be inspected; positioning the sensor positioning means for remotely positioning and engaging said sensor probe means to facilitate eddy current portion of the turbine blade to be inspected; inspecting the turbine blade with said sensor probe means; and receiving data from said sensor probe means relative to inspection of the turbine blade of the turbine.

### BRIEF DESCRIPTION OF THE DRAWINGS

Figure 1A is a perspective view of the Turbine Blade Inspection Apparatus of the present invention;
Figure 1B is a perspective view, partially broken away, of the distal end of the apparatus shown in Figure 1A;
Figure 1C is a perspective view of the distal end of the apparatus in Figure 1A shown in an open position;

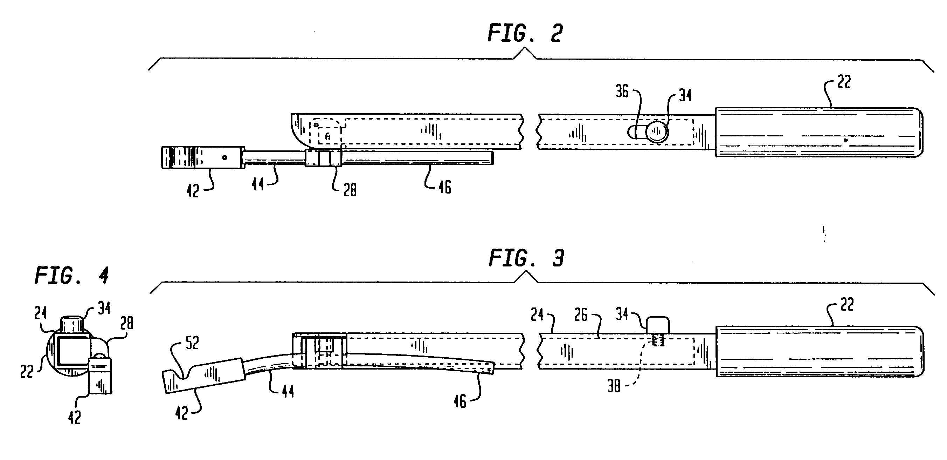

Figure 2 is a top view of the Turbine Blade Inspection Apparatus shown in Figure 1A;
Figure 3 is a side view of the apparatus shown in Figure 1A;
Figure 4 is an end view of the distal end of the apparatus shown in Figure 1A;

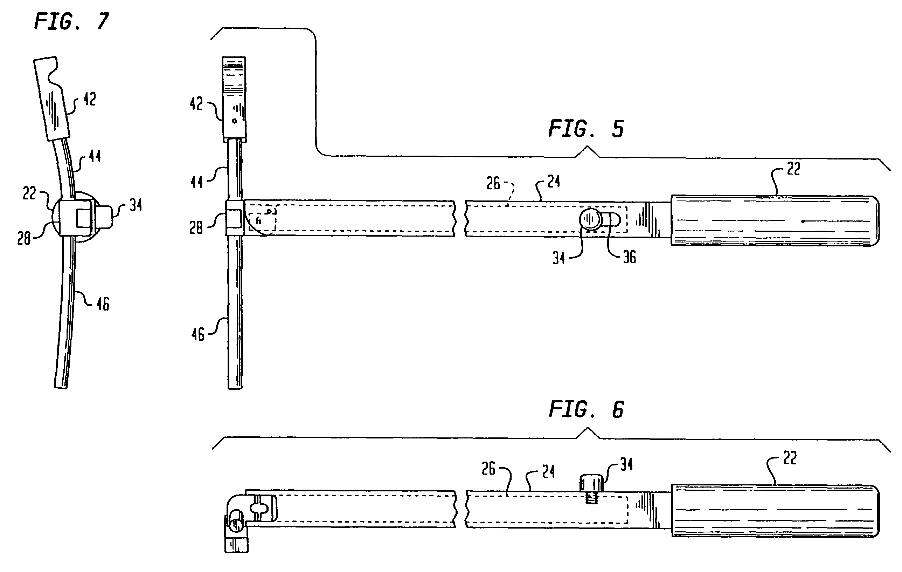

Figure 5 is a top view of the Turbine Blade Inspection Apparatus in Figure 1A shown in an open position;
Figure 6 is a side view of the Turbine Blade Inspection Apparatus in Figure 1A shown in an open position;
Figure 7 is an end view of the Turbine Blade Inspection Apparatus in Figure 1A shown in an open position;
Figure 8 is a perspective view partially broken away of a turbine interior showing the turbine rotor and two blades with the apparatus of the present invention inserted through the borescope hole which passes through the outer and inner turbine casing walls and positioned in a closed position between two turbine blades;
Figure 9 is a perspective view partially broken away of the turbine interior shown in Figure 8 with the apparatus of the present invention positioned in opened and engaged positions on the turbine blade being inspected.

### DETAILED DESCRIPTION

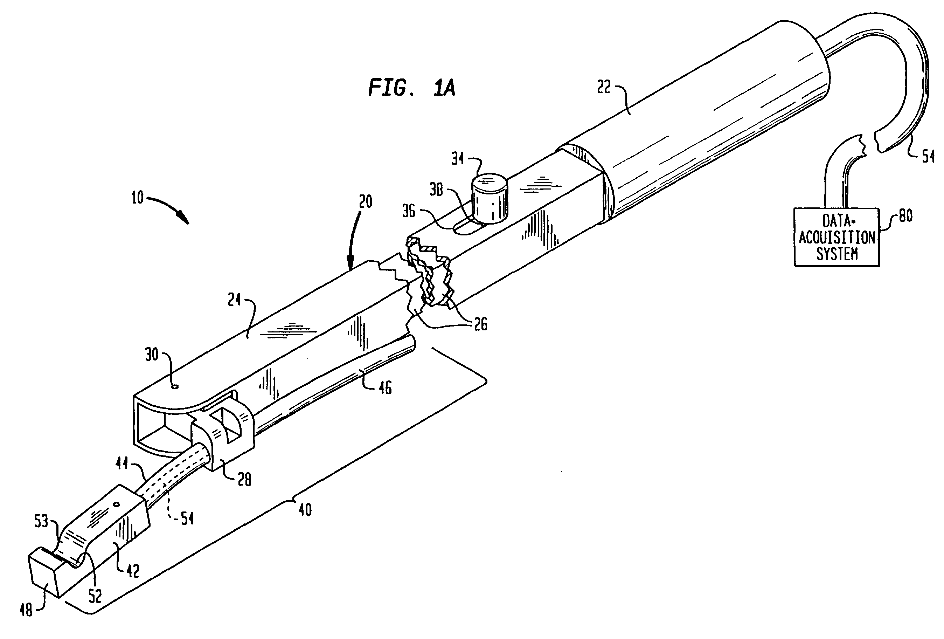

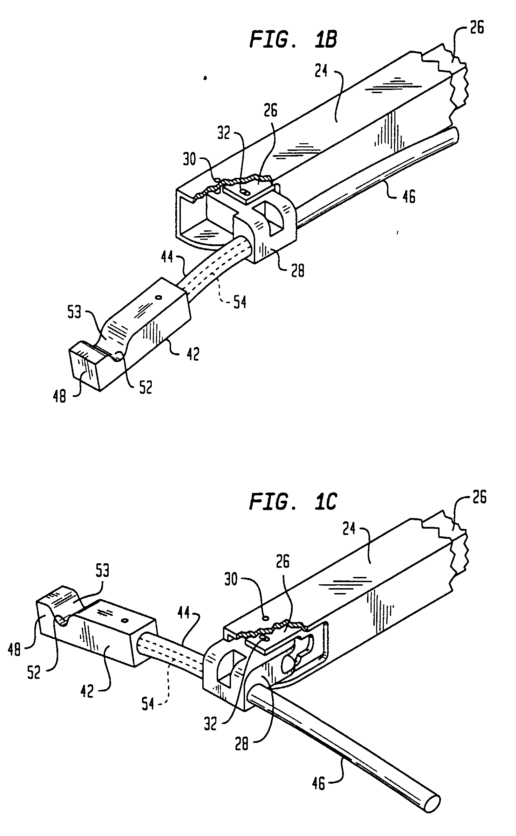

In accordance with the present invention, a Turbine Blade Inspection Apparatus 10 shown in Figure 1 is introduced through a borescope hole in a turbine casing and into the stage of the turbine housing of the turbine blade(s) to be inspected. Because of its narrow width, Turbine Blade Inspection Apparatus 10 can be inserted through the borescope hole to obtain access to the turbine blades within the turbine interior without removing the turbine casings. Turbine Blade Inspection Apparatus 10 is manually positioned between two turbine blades and placed on the trailing (or leading) edge of the blade to be inspected. After the completion of the inspection of the trailing (or leading) edge of the inspected blade, the Turbine Blade Inspection Apparatus 10 is withdrawn from the turbine and is then available to inspect the trailing (or leading) edge of another blade.

Referring to the figures and particularly to Figure 1A, Turbine Blade Inspection Apparatus 10 comprises an insertion assembly 20, a sensor positioning assembly 40, and a data acquisition system 80. Insertion assembly 20 comprises a handle 22 toward the proximate end of Turbine Blade Inspection Apparatus 10 and is connected to an outer rod 24 which is connected at its distal end to sensor positioning assembly 40. An actuating rod 26 is disposed within the outer rod 24 and when actuated, serves to move the sensor positioning assembly 40 from a closed position as shown for example in Figure 1A to an open position shown for example in Figure 1C as more fully described below. The actuating rod 26 extends within outer rod 24 between handle 22 to a mounting block 28 to which is mounted sensor positioning assembly 40. The distal end of actuating rod 26 is coupled with mounting block 28 by coupling pin 32. Mounting block 28 is connected by a pivot pin 30 to the outer rod 24 which enables the mounting block 28 to rotate the sensor positioning assembly 40 between a closed position (Figure 1A) to an open position (Figure 1C). In operation, when actuating rod 26 is displaced within outer rod 24 toward the distal end of apparatus 10, mounting block 28 which is connected to actuating rod 26 by coupling pin 32 is caused to rotate around pivot 30 from a first position in which sensor positioning assembly 40 is in the closed position (Figure 1A) to a second position in which sensor positioning assembly 40 is in the open position (Figure 1C).

A threaded knob 34 passes through guide slot 36 in outer rod 24 and is received in a threaded aperture 38 formed in actuating rod 26. By releasing knob 34 from its locked position but still secured within threaded aperture 38, actuating rod 26 can be caused to be moved axially within outer rod 24 by sliding knob 34 along the distance of guide slot 36 in outer rod 24. By moving actuating rod 26 axially within guide slot 36, the distal end of actuating rod 26 which is coupled by coupling pin 32 to mounting block 28 causes mounting block to rotate around pivot 30, and thereby rotate sensor positioning assembly 40 from a closed position to an opened position. The sensor positioning assembly 40 can be secured in either the opened or closed position once placed in such position by tightening threaded knob 34 into threaded aperture 38 thereby securing actuating rod 26 to outer rod 24.

When Turbine Blade Inspection Apparatus 10 is in the closed position, sensor positioning assembly 40 is abutting against and parallel to outer rod 24. Because of its narrow width in the closed position, Turbine Blade Inspection Apparatus 10 can be inserted through the borescope hole in the turbine outer and inner casings to obtain access to the turbine blades within the turbine interior without removing the turbine casing. When Turbine Blade Inspection Apparatus 10 is in the opened position, sensor positioning assembly 40 is perpendicular to outer rod 24 to form a "T"-shape as shown in Figure 1C. Referring to Figure 1A, sensor positioning assembly 40 comprises a probe body 42 which is connected to probe control arm 44 which is in turn connected to one side of mounting block 28. Probe body 42 includes at one end a probe head 48 which is configured to have a guide slot 52 for engagement in the trailing edge of the turbine blade to be inspected and a surface 53 for contact with that portion of the surface of the turbine blade to be inspected. Probe head 48 holds eddy current coils in a fixed relative geometry to one another at a predetermined distance from the surface 53. Extending from an opposite side of mounting block 28 is a probe guide positioning arm 46.

The specific relative geometry of and distance between the eddy current coils, the distance of the coils within probe head 48 from the surface 53 of guide slot 52, as well as the contour of guide slot 52 are a matter of design choice depending on the particular turbine blades to be inspected and the desired measurement accuracy. The eddy current coils of the Turbine Blade Inspection Apparatus 10 are calibrated to a known flaw size establishing sensitivity levels by conventionally known methods and apparatuses such as by an external blade with an electro discharge machine notch.

Cables 54 transmit power supply to and output signals from eddy current coil assembly in probe head 48 and transmit the signals to instrumentation receiving the output of the probe. The output signals from the probe are transmitted to data acquisition system 80 which displays the output on a screen positioned where it can be observed by the operator performing the inspection, or stored in a data storage unit for real time and/or post-inspection analysis.

The system described and shown is provided for the inspection of a part of the concave face near trailing edge of the turbine blade; it can be understood that by modifying the geometric position of various parts, the system can be adapted for the inspection of the leading edge of the blade and to any area of the blade and to any blade shape. Each probe head, guide slot and guide slot surface contour are determined based on the particular surface to be inspected.

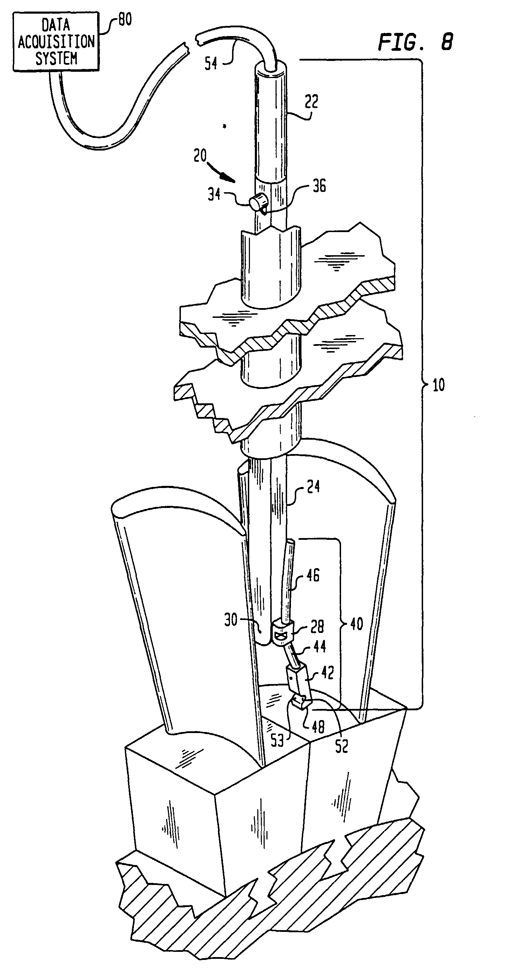

In accordance with another aspect of the present invention, a method for inspecting the turbine blades without requiring turbine disassembly is provided. The plug for the borescope hole is opened which provides access for the operator to reach, in accordance with the present invention, through both the outer and inner turbine engine casings and position the probe 42 of the Turbine Blade Inspection Apparatus 10 into the turbine stage in which the turbine blades are to be inspected. Thus, access to the turbine interior and the turbine blades through the borescope is achieved without the need to remove the outer and inner casings of the turbine. Once access to the turbine blades is accomplished, placement of probe 42 of the Turbine Blade Inspection Apparatus 10 onto the turbine blade to be inspected can commence. The operator manually places the distal end of the Turbine Blade Inspection Apparatus 10 down through the open borescope through the outer and inner turbine cases and into the turbine interior between two adjacent turbine blades which encircle the turbine rotor steeple as shown in Figure 8. The operator holds onto handle 22 and releases threaded knob 34 from its locked position to free actuating rod 26 from outer rod 28 and linearly slides knob 34 in guide slot 36 to cause sensor positioning assembly 40 to the opened position as shown in Figure 1C. The operator then tightens threaded knob 34 to relocked actuating rod 26 to outer rod 28 with sensor positioning assembly in the opened position.

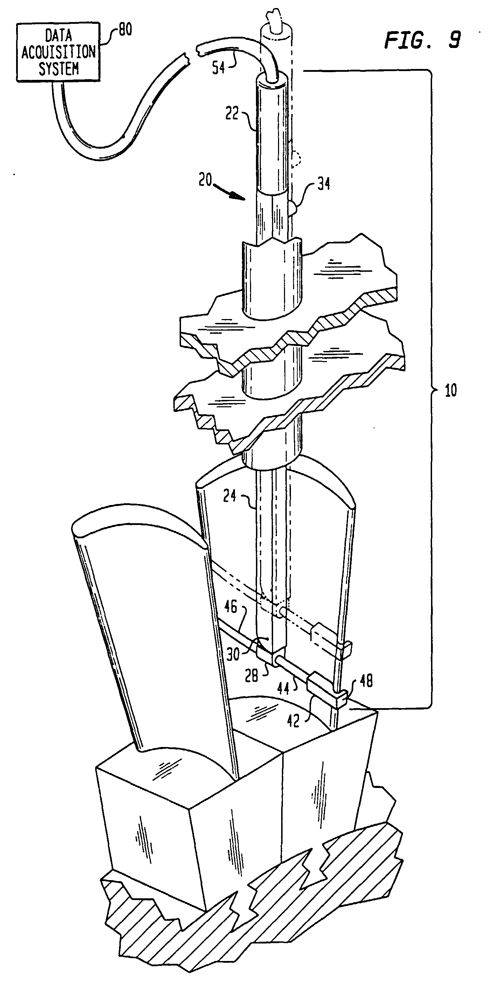

The Turbine Blade Inspection Apparatus is then manipulated by the operator by positioning slot 52 of probe body 42 onto the trailing edge of the turbine blade to be inspected and probe guide positioning arm rod 46 into contact with the leading edge of the turbine blade to be inspected as shown in Figure 9. Slot 52 in probe body 42 is contoured to fit over the trailing edge of the turbine blade and provides proper alignment of the eddy current coil assembly within probe 42 to the trailing edge of the turbine blade. As the probe head engages the trailing edge of the turbine blade, the operator moves Turbine Blade Inspection Apparatus 10 by manipulating handle 22 to maintain probe guide positioning arm 46 against the leading edge so that slot 52 of probe body 42 is maintained in contact with the trailing edge to provide proper alignment of the eddy current coil assembly within probe 42 to the area of inspection of the trailing edge of the turbine blade. Although the radial position of the trailing edge and the radial position of the leading edge can change as a function of the axial height of the turbine blade, the Turbine Blade Inspection Apparatus 10 follows those changes while maintaining contact between the trailing edge of the turbine blade and the coil assembly by allowing the radial position of handle 22, as controlled by the operator to change within the borescope as a function of axial height.

Once the inspection of the leading edge of the turbine blade undergoing inspection has been completed, Turbine Blade Inspection Apparatus 10 can be removed through the borescope by placing it in a closed position and then retracting it from the turbine assembly.

To inspect another or successive turbine blades, the turbine is rotated into a position so that the other or successive turbine blades to be inspected can be accessed through the borescope. Such rotation can be performed by any conventional means such as by an electric jogging motor with a control box that can be operated by the inspector at the borescope hole. After rotating the turbine so that the next turbine blade to be inspected is placed into position, the operator again places the distal end of Turbine Blade Inspection Apparatus 10 down through the opened boresope hole and between the next two adjacent turbine blades, where the operator repeats the sequence of steps performed for the inspection of the turbine blade previously inspected.

While the foregoing description and drawings represent the preferred embodiments of the present invention, it will be apparent to those skilled in the art that various changes and modifications may be made therein without departing from the true spirit and scope of the present invention.

## Claims

1. A turbine blade inspection apparatus for inspecting in situ turbine engine blades in a stage of the turbine engine by eddy currents from a remote location, the engine including a casing about said stage and a borescope hole extending through the casing and into the stage in which a turbine blade is to be inspected, the apparatus comprising:
insertion means for insertion into the borescope hole extending through the casing and into the stage in which the turbine blade is to be inspected;
sensor probe means for holding eddy current coils; and
sensor positioning means on said insertion means and adapted to be moveable by said insertion means for remotely positioning and engaging said sensor probe means to a portion of the turbine blade to be inspected to thereby facilitate eddy current inspection of the turbine blade.

2. A method for inspecting in situ turbine engine blades in a stage of the turbine engine by eddy currents from a remote location, the engine including a casing about said stage and a borescope hole extending through the casing and into the stage in which a turbine blade is to be inspected, the method comprising the steps of:
(a) providing a turbine blade inspection apparatus which includes insertion means for insertion into the borescope hole and into the stage in which the turbine blade is to be inspected, sensor probe means for holding eddy current coils, sensor positioning means on said insertion means and adapted to be moveable by said insertion means for remotely positioning and engaging said sensor probe means to a portion of the turbine blade to be inspected to thereby facilitate eddy current inspection of the turbine blade;
(b) inserting the insertion means of said turbine inspection apparatus into the borescope hole and into the stage in which the turbine blade is to be inspected;
(c) positioning the sensor positioning means for remotely positioning and engaging said sensor probe means to facilitate eddy current inspection of a portion of the turbine blade to be inspected;
(d) inspecting the turbine blade with said sensor probe means; and
(e) receiving data from said sensor probe means relative to inspection of the turbine blade of the turbine.
